# EUROPEAN PATENT SPECIFICATION

(11) **EP 3 271 182 B1**
(45) Date of publication and mention of the grant of the patent: **29.12.2021**
(21) Application number: 15902388.6
(22) Date of filing: 21.08.2015
(51) Int. Cl.: B41J 2/44, B41J 2/15, B29C 35/08, B29K 105/00, B41J 11/00, B29C 64/209, B29C 64/112, B29C 64/268, B41J 2/155, B33Y 30/00

(54) **PRINTING APPARATUS WITH AN EMISSION DEVICE TO EXPOSE PRINTING MATERIAL**
DRUCKVORRICHTUNG MIT EINER EMISSIONSVORRICHTUNG ZUR EXPOSITION VON DRUCKMATERIAL
DISPOSITIF D'IMPRESSION AVEC UN DISPOSITIF D'ÉMISSION POUR EXPOSER UN MATÉRIAU D'IMPRESSION

(43) Date of publication of application: 24.01.2018
(73) Proprietor: Hewlett-Packard Development Company, L.P., Spring TX 77389 (US)
(72) Inventor: CHEN, Chien-Hua, Corvallis, Oregon 97330 (US); LIU, Qin, Corvallis, Oregon 97330 (US); TAN, Hua, Corvallis, Oregon 97330 (US); CHEN, Zhizhang, Corvallis, Oregon 97330 (US)
(74) Representative: Haseltine Lake Kempner LLP
(86) International application number: PCT/US2015/046235
(87) International publication number: WO 2017/034513

(56) References cited:
- EP-A1- 2 848 408
- WO-A1-2014/133576
- JP-A- 2000 108 494
- JP-A- 2003 011 349
- JP-A- 2003 305 846
- JP-A- 2004 230 638
- JP-A- 2012 116 192
- JP-A- 2015 100 945
- US-A1- 2006 082 604
- US-A1- 2006 082 604
- US-A1- 2013 293 621

## Description

### BACKGROUND

Printing devices generally deposit a printing material, such as ink, on a media, such as paper.
EP2848408A1 discloses a charge control type ink jet printer including a nozzle which continuously forms ink droplets, a charging electrode which charges each of the ink droplets, a deflection electrode which deflects the charged ink droplet, and a print head which discharges the deflected ink droplet to print the droplet onto a printed substrate. US2006/0082604A1 and JP2015100945A disclose further related art.

### DRAWINGS

FIG. 1 is a block diagram of an example printing device.
FIG. 2 is a block diagram of an example printing device.
FIG. 3 is a block diagram of an example printhead.
FIG. 4 is an example block diagram of an example printhead.
FIG. 5A is a cross-sectional view of an example printhead and emission devices.
FIG. 5B is a cross-sectional view of an example printhead and emission devices.
FIG. 6 is a flowchart that illustrates an example sequence of operations that may be performed by a printing device.
FIG. 7 is a flowchart that illustrates an example sequence of operations that may be performed by a printing device.
FIGS. 8A-B are flowcharts that illustrate example processes.
FIG. 9 is a cross-sectional view of an example printhead.

Throughout the drawings, identical reference numbers designate similar, but not necessarily identical, elements. The figures are not necessarily to scale, and the size of some parts may be exaggerated to more clearly illustrate the example shown.

### DESCRIPTION

Generally, a printing device may eject/deposit printing material on a physical medium (also referred to as media) to thereby print content on the media. Some printing devices comprise a printhead that includes a plurality of nozzles. To print, a printing device may selectively actuate the plurality of nozzles to thereby eject printing material from the nozzles onto the media. Generally, a printing device receives print content to be printed and the printing device generates nozzle data for nozzles of the printhead that cause the nozzles to be actuated in a manner such that the print content is printed on the physical medium.

Generally, nozzles eject printing material under control of a printing device to form printed content with the printing material on a physical medium. Some examples of types of nozzles implemented in printing devices and/or printheads include thermal ejectors, piezoelectric ejectors, and/or other such ejectors that may cause a drop of printing material to eject from a nozzle orifice.

Printing devices, as described herein, may be two-dimensional printers and/or three-dimensional printers (3D). In some examples, a printing device may be utilized to print content onto a media, such as paper or a layer of powder-based build material. In some examples, the printing device may print content by deposition of consumable fluids in a layer-wise additive manufacturing process. Generally, consumable fluids and/or consumable materials may include all materials and/or compounds used, including, for example, ink, toner, fluids or powders, or other raw material for printing. Generally, printing material, as described herein may comprise consumable fluids as well as other consumable materials. Printing material may comprise ink, toner, fluids, powders, colorants, varnishes, finishes, gloss enhancers, binders, and/or other such materials that may be utilized in a printing process.

In some examples, the printing material may be a fluid (such as an ink), and the nozzles may be controlled according to nozzle data to cause printing material drops to eject from the nozzles. Moreover, in some printing devices, colors of printing material may be printed sequentially. For example, in some printing devices, the colors in which the printing device prints may be cyan, magenta, yellow, and black (which is referred to as CMYK printing). In these examples, some printing devices print with a black printing material first, a cyan printing material second, a magenta printing material third, and a yellow printing material fourth. Generally, the colors in which the printing device prints may be referred to as printing colors and/or primary colors. As will be appreciated, through various printing techniques (such as half-toning) and mixing of colors of printing materials, secondary colors may be printed in combination with the primary colors.

Generally, color saturation and the visual appearance thereof in printed content may be based on material properties of the printing materials used and the physical medium upon which the printing materials are applied. In particular, for some fluid based printing materials, material properties of the printing material corresponds to a penetration depth of the printing material in the physical medium, In turn, penetration depth of printing material in the physical medium generally corresponds to visual appearance of the printed content, where improved color saturation and appearance is generally related to less penetration depth of the printing material. In other words, printing material that remains closer to a surface of the physical medium generally corresponds to better visual appearance.

In fluid printing material based printing devices, a lower viscosity of the printing material generally corresponds to increased penetration depth in the physical medium. Hence, a lower viscosity fluid printing material generally has a higher penetration depth into a physical medium as compared to a higher viscosity fluid printing material. However, higher viscosity fluid printing material based printing devices generally utilize additional components due to issues arising from storage, fluid communication, and ejection of the higher viscosity fluid printing material. For example, some printing devices that utilize higher viscosity fluid printing material include circulation components to address settling issues associated with the higher viscosity fluid printing material.

In some examples provided herein a printing device and/or printhead may comprise at least one emission device, where the emission device may be controlled to emit energy to thereby expose printing material drops to emitted energy to change at least one material property of ejected printing material drops before the ejected printing material drops contact a surface of a physical medium. In some examples, the emission device is operated to expose in-flight printing material drops to thereby increase viscosity of the printing material drops in-fiight. In some examples, the emission device is operated to expose in-flight printing material drops to thereby change a size of ejected printing material drops in-flight. In some examples, the emission device is operated to expose in-flight printing material drops to thereby change a depth of penetration of printing material drops in-flight. Generally, an in-flight printing material drop corresponds to a printing material drop ejected from a nozzle and prior to contacting a surface of a physical medium.

Examples of emission devices that may be implemented in examples of printing devices and/or printheads may comprise light-emitting diodes (LEDs), thermal irradiation devices, electron field emission devices, corona discharge devices, and/or other such devices that may emit electromagnetic radiation/energy. In some examples, the emission device may comprise one or more LEDs that emit electromagnetic radiation, such as ultraviolet (UV), infrared, visible, etc.

In turn, some example printing devices and/or printheads may utilize electromagnetic radiation reactive printing material. For example, a printhead may comprise one or more ultraviolet light emitting devices, and the printhead may utilize a UV curable printing material. Some example ink-based printing devices and/or printheads may utilize water-based UV curable ink. In these examples, the printing devices and/or printheads may comprise one or more UV emission devices. As will be appreciated, in some examples, printing material having a lower relative viscosity may be stored and ejected, and during flight of ejected printing material drops, examples may increase viscosity of the ejected printing material drops, which may improve visual appearance characteristics (e.g. color saturation) as well as facilitate implementation of various printing processes (e.g., half-toning, variable penetration depth printing, etc.). As provided in examples herein, the at least one material property of printing material drops that may be changed by exposure may comprise viscosity, cross-linking.. drop size, drop surface tension, drop shape, and/or other such properties that may affect printing.

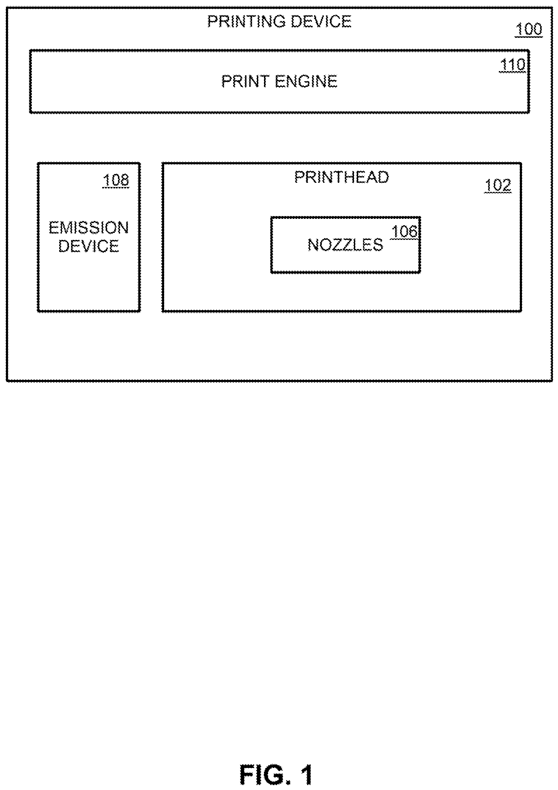

Turning now to the figures, and particularly to FIG. 1, this figure provides a block diagram that illustrates components of an example printing device 100. In this example, the printing device comprises a printhead 102. The printhead comprises a plurality of nozzles 106 for ejecting printing material drops. In addition, the printing device comprises at least one emission device 108 positioned proximate the printhead 102. As will be appreciated, at least one emission device may comprise a plurality of emission devices and/or an array of emission components packaged in one or more emission devices. The printing device 100 further comprises a print engine 110, where the print engine 110 controls ejection of printing material drops from the plurality of nozzles, and the print engine controls emission of energy by the at least one emission device to thereby expose ejected printing material drops to emitted energy to change at least one material property of ejected printing material drops before ejected printing material drops contact a surface of a physical medium,

Generally, the print engine 110 may comprise any combination of hardware and programming to implement the functionalities and/or perform the operations described herein. For example, the print engine 110 may comprise a processing resource and instructions executable by the processing resource to cause the processing resource to perform the operations described herein. In some examples, the print engine 110 may be implemented in circuitry. For example, the print engine 110 may comprise an application specific integrated circuit (ASIC) and/or other logical components. Moreover, example printing devices are generally not limited to the specific implementation of engines described herein, In this regard, some examples of printing devices may comprise more or less engines to perform the same operations, more operations, and/or less operations.

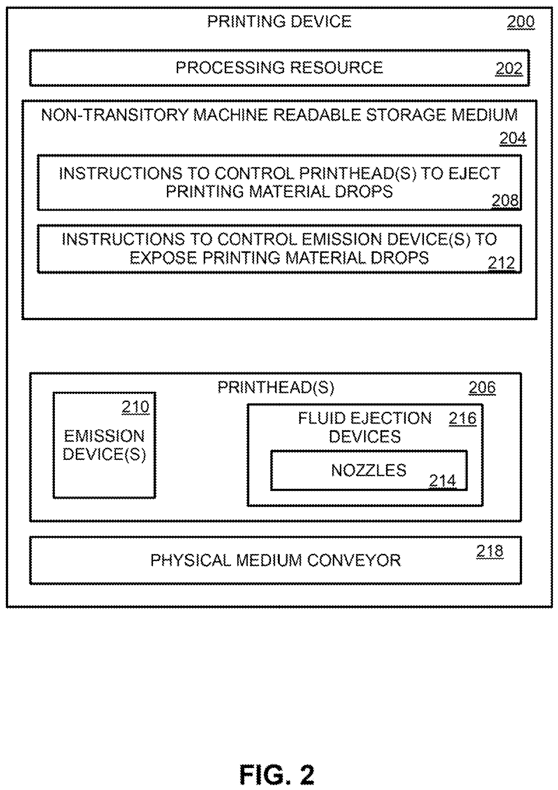

Turning now to FIG. 2, this figure provides a block diagram that illustrates components of an example printing device 200. In this example, the printing device 200 comprises a processing resource 202 and a machine-readable storage medium 204, which may be referred to as a memory and/or a memory resource. In the examples described herein, a processing resource 202 may include at least one hardware-based processor. Furthermore, the processing resource 202 may include one processor or multiple processors, where the processors may be configured in a single printing device 200 or distributed across multiple computing devices and/or printing devices connected locally and/or remotely. As will be appreciated, a processing resource 202 may comprise one or more general purpose data processors and/or one or more specialized data processors. For example, the processing resource 202 may comprise a central processing unit (CPU), a graphics processing unit (GPU), an application-specific integrated circuit (ASIC), and/or other such configurations of logical components for data processing.

The machine-readable storage medium 204 may represent the random access memory (RAM) devices comprising the main storage of the example printing device 200, as well as any supplemental levels of memory, e.g., cache memories, non-volatile or backup memories (e.g., programmable or flash memories), read-only memories, etc. In addition, machine-readable storage medium 204 may be considered to include memory storage physically located elsewhere, e.g., any cache memory in a microprocessor, as well as any storage capacity used as a virtual memory, e.g., as stored on a mass storage device or on another computing device in communication with the example printing device 200. In some examples, the machine-readable storage medium 204 may correspond to various types of storage mediums, such as computer readable storage medium, which may include volatile and non-volatile, removable and non-removable tangible media implemented in any technology for the storage and processing of information. Computer readable storage media may include RAM, ROM, erasable programmable read-only memory (EPROM), electrically erasable programmable read-only memory, flash memory or other solid state memory technology, portable compact disc memory, or other optical storage, or any other medium that may be used to store executable instructions and information. Furthermore, the machine-readable storage medium 204 may be non-transitory.

Generally, the machine-readable storage medium 204 may be encoded with and/or store instructions that may be executable by the processing resource 202, where execution of such instructions may cause the processing resource 202 and/or printing device 200 to perform the functionalities, processes, and/or sequences of operations described herein. In this example, the machine-readable storage medium 204 comprises instructions to control one or more printheads 206 of the printing device 200 to eject printing material drops 208. In addition, the machine-readable storage medium comprises instructions to control one or more emission devices 210 of the printheads 206 to emit energy to thereby expose ejected printing material drops prior to the printing material drops contacting a surface of a physical medium 212.

As shown in this example, emission devices 210 may be coupled to the printheads 206. In some examples, the emission devices 210 are positioned proximate nozzles 214 of fluid ejection devices 216 of the printheads 206. In addition, in some examples, the fluid ejection devices 216 and emission devices 210 may be molded to a substrate of a printhead 206. Furthermore, the example printing device 200 of FIG. 2 comprises a physical medium conveyor 218. Generally, the physical medium conveyor may be controlled by the processing resource 202 during a printing process to convey a physical medium being printed concurrent with the ejection of printing material drops by nozzles 214.

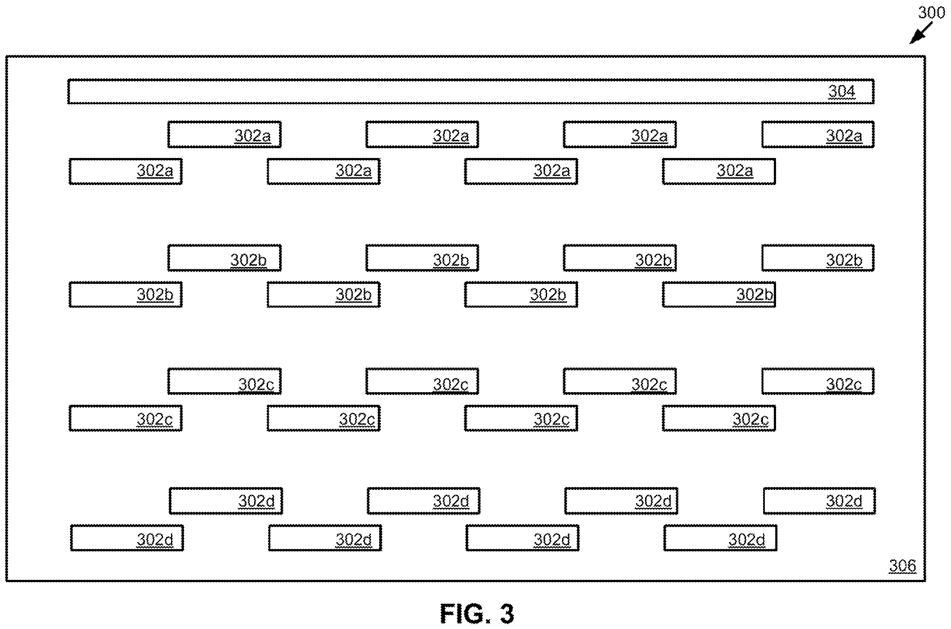

FIG. 3 provides a block diagram of an example printhead 300. In this example, the printhead 300 comprises a plurality of fluid ejection devices 302a-d that include nozzles and an emission device 304 coupled to a support substrate 306. In this particular example, the emission device 304 may emit energy to thereby expose printing material drops ejected from the fluid ejection devices 302a-d to change a material property of the ejected printing material drops in-flight. In some examples, the emission device 304 emits energy to expose in-flight printing material drops to the emitted energy to thereby increase a viscosity of in-flight printing material drops. In some examples, the emission device emits energy to expose some in-flight printing material drops to the emitted energy to thereby change a viscosity of the some in-flight printing material drops. As will be appreciated, changing a viscosity of printing material drops in-flight may affect the spreading of the drops on the physical medium and thus facilitate performing half-toning printing processes. Furthermore, in some examples, the fluid ejection devices 302a-d and/or the emission device 304 may be molded to the support substrate 306. Generally, molding of the fluid ejection devices 302a-d and/or the emission devices 304 may comprise overlaying the support substrate 306, the fluid ejection devices 302a-d, and/or the emission devices with an overmold material. The overmold material may comprise, for example, an epoxy mold compound, and/or other such encapsulants for semiconductors.

In the example printhead of FIG. 3, the printhead 300 may have a width across which fluid ejection devices 302a-d may be generally arranged in an end-to-end arrangement. In addition, the emission device 304 is positioned across the width of the printhead 300 such that the emission device 304 may be proximate sets of nozzles of the fluid ejection devices 302a-d. In some embodiments, the emission device 304 may comprise a plurality of emission devices and/or a component comprising a plurality of emitters (such as an array of light emitting diodes). As discussed, some printing devices may print content by printing with each printing color (which may also be referred to as a primary color) in a sequential order. The example printhead 300 of FIG. 3 comprises a first set of fluid ejection devices 302a corresponding to a first printing color, a second set of fluid ejection devices 302b corresponding to a second printing color, a third set of fluid ejection devices 302c corresponding to a third printing color, and a fourth set of fluid ejection devices 302d corresponding to a fourth printing color.

Generally, when printing with the example printhead 300, a physical medium may be conveyed under the printhead such that sequential printing by each set of fluid ejection devices corresponds to: the first set of fluid ejection devices 302a having a first printing order and ejecting printing material drops for printing on the physical medium; the second set of fluid ejection devices 302b having a second printing order and ejecting printing material drops for printing on the physical medium: the third set of fluid ejection devices 302c having a third printing order and ejecting printing material drops for printing on the physical medium; and the fourth set of fluid ejection devices 302d having a fourth printing order and ejecting printing material drops for printing on the physical medium.

Generally, a respective nozzle of a particular fluid ejection device of each set of fluid ejection devices 302a-d corresponds to a particular print location. Referring to the CMYK printing example to clarify, a respective nozzle for printing with a black printing material, a respecitve nozzle for printing with a cyan printing material, a respective nozzle for printing with a magenta printing material, and a respective nozzle for printing with a yellow printing material may be aligned such that the respective nozzles print to a common print location in a sequential order. In addition, in some examples, the width of the printhead 300 may generally correspond to a print width of a printing device, which may also be referred to as a page-wide printhead. In some examples of page-wide printheads, the printhead may generally remain fixed while a physical medium is conveyed through a print zone of the printhead.

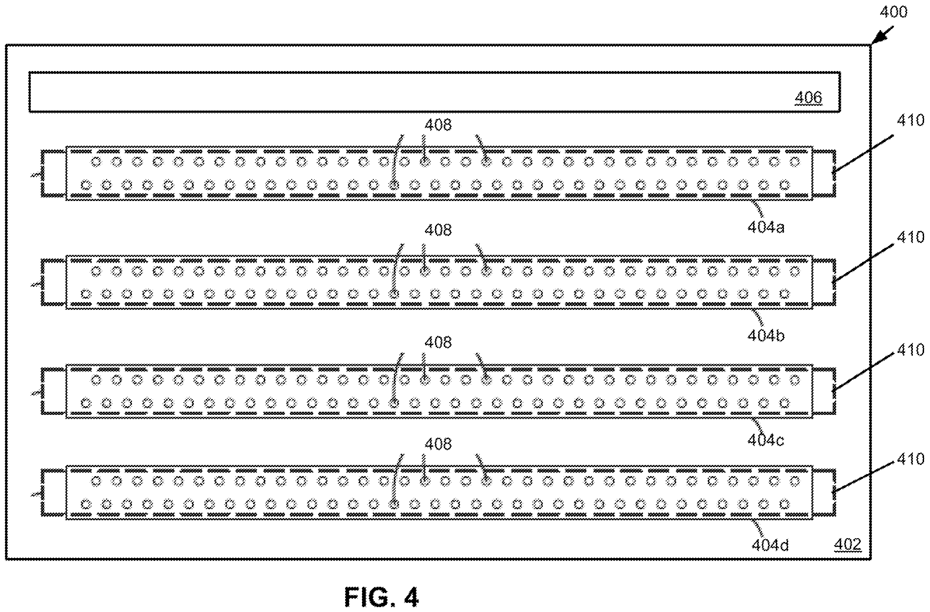

FIG. 4 provides a block diagram of an example printhead 400. In this example, the printhead 400 comprises a support substrate 402, fluid ejection devices 404a-d coupled to the support substrate 402, and at least one emission device 406 coupled to the support substrate 402. As shown, each fluid ejection device 404a-d comprises a plurality of nozzles 408. In this example, each fluid ejection device 404a-d generally comprises a respective nozzle 408 that corresponds to a particular print location. Furthermore, in some examples, the support substrate 402 may have a fluid communication channel 410 passing therethrough that corresponds to each fluid ejection device 404a-d and the nozzles 408 thereof. In these examples, each fluid communication channel 410 may be in fluid communication with nozzles 408 of a respective fluid ejection device 404a-d, such that printing material may be conveyed to the nozzles 408 via the fluid communication channels 410.

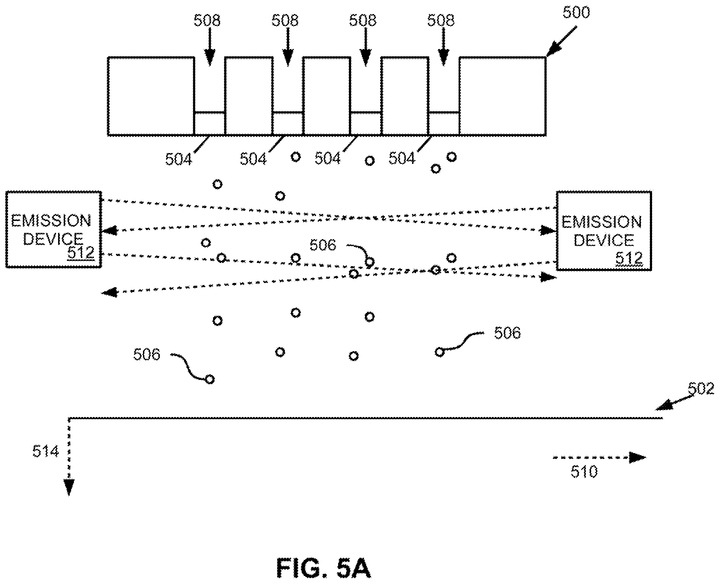

FIG. 5A provides a block diagram that illustrates a cross-sectional view of an example printhead 500 and an example physical medium 502 during an example printing process. In this example, the printhead 500 comprises nozzles 504 to eject printing material drops 506. As shown, fluid communication channels 508 may convey printing material to the nozzles 504 for ejection in form of drops. In the example, the physical medium 502 may be conveyed along reference axis 510. As will be appreciated, in other examples, a printhead may move relative to a physical medium, and/or the printhead and physical medium may move along one or more axes of movement and/or rotation. The printhead 500 and/or a printing device into which printhead 500 may be implemented comprises emission devices 512, where emission devices 512 emit energy (e.g., electromagnetic radiation) to thereby expose ejected printing material drops 506. Furthermore, a depth of penetration of ejected printing material drops 506 may be measured along reference axis 514, which is generally normal to a surface of the physical medium 502. In this cross-sectional view, the alignment of the nozzles 504 for a common print location is illustrated, where printing material drops from each nozzle may be ejected sequentially and corresponding to conveyance of the physical medium 502 to print at the common print location.

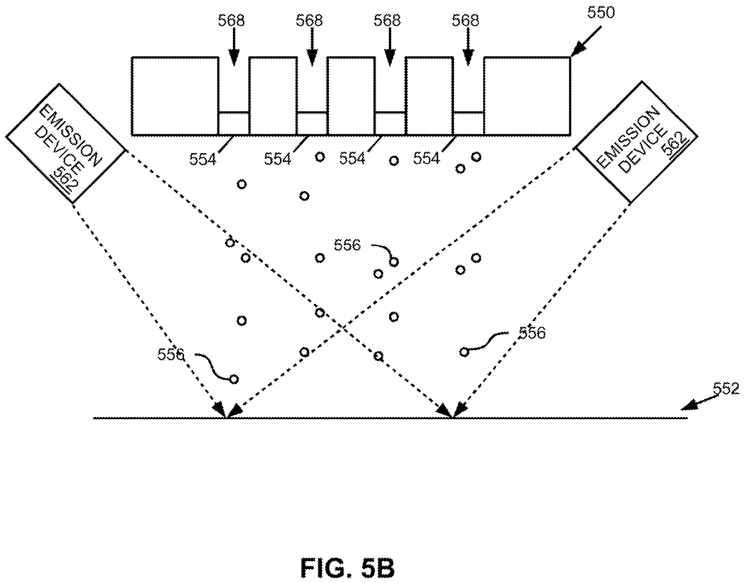

FIG. 5B provides a block diagram that illustrates a cross-sectional view of an example printhead 550 and an example physical medium 552 during an example printing process. In this example, the printhead 550 comprises nozzles 554 to eject printing material drops 556. As shown, fluid communication channels 558 may convey printing material to the nozzles 554 for ejection in form of drops. The printhead 550 and/or a printing device into which printhead 550 may be implemented comprises emission devices 562, where emission devices 562 emit energy (e.g., electromagnetic radiation) to thereby expose ejected printing material drops 556. In this example, the emission devices 562 may be positioned such that the emission devices 562 may expose at least a portion of a surface of the physical medium 552.

In some examples, one or more emission devices may expose at least a portion of a surface of a physical medium concurrent with exposing ejected printing material drops prior. In some examples, the surface of the physical medium may be exposed prior to ejected printing material drops contacting the surface. In other examples, the surface of the physical medium may be exposed during and/or after the surface has been contacted by ejected printing material drops. In such examples, at least one material property of the physical medium may be changed due to exposure to energy emitted by the one or more emission devices. In some examples, a printing device and/or printhead may comprise a first emission device to emit a first type of energy and a second emission device to emit a second type of energy, In such examples, a printing material may be reactive to the first type of energy and the physical medium may be reactive to the second type of energy. For example, the first emission device may be a UV emission device, and the printing material may be UV reactive. In this example, the second emission device may be an infrared emission device, and the physical medium may be infrared reactive. As another example, at least one emission device may be a corona discharge device, and a surface of a physical medium may be exposed to such emitted energy therefrom such that a material property of the surface of the physical medium may change prior to contact with ejected printing material drops.

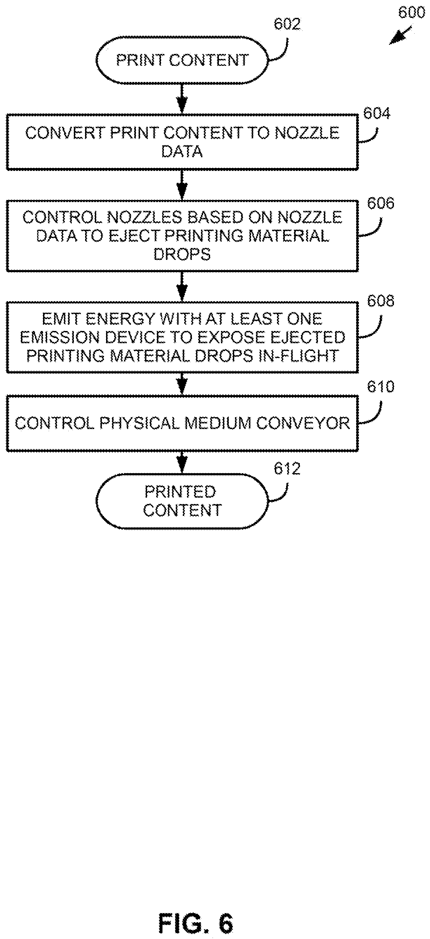

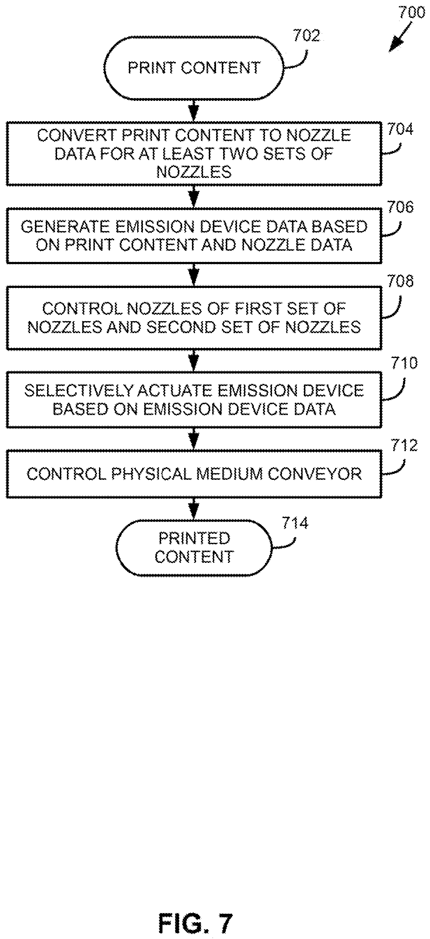

FIGS. 6 and 7 provide flowcharts that provide example sequences of operations that may be performed by an example printing device and/or a processing resource thereof to perform example processes and methods. In some examples, the operations included in the flowcharts may be embodied In a memory resource (such as the example machine-readable storage medium 204 of FIG. 2) in the form of instructions that may be executable by a processing resource to cause the printing device to perform the operations corresponding to the instructions. Additionally, the examples provided in FIGS. 6-7 may be embodied in printing devices, engines, machine-readabie storage mediums, processes, and/or methods. In some examples, the example processes and/or methods disclosed in the flowcharts of FIGS. 6-7 may be performed by one or more engines implemented in a computing device, such as the example print engine 110 of FIG. 1.

FIG. 6 provides a flowchart 600 that illustrates an example sequence of operations that may be performed by a printing device, where the printing device comprises at least one printhead, the at least one printhead comprises fluid ejection devices comprising a plurality of nozzles. For print content (block 602), the printing device may convert the print content to nozzle data corresponding to the nozzles (block 604). The printing device controls the nozzles with a processing resource of the printing device based on the nozzle data to cause printing material drops to be ejected from the nozzles (block 606). Furthermore, the printing device comprises at least one emission device, and the printing device emits energy with the at least one emission device to thereby expose ejected printing material drops in-flight (block 608), where exposure of ejected printing material drops thereby changes at least one material property of such ejected printing material drops. The printing device also controls a physical medium conveyor of the printing device to thereby convey a physical medium such that ejected printing material drops contact and penetrate a surface of the physical medium during conveyance of the physical medium to (block 610) to thereby print the print content, which may be referred to as printed content (block 612).

FIG. 7 provides a flowchart 700 that illustrates an example sequence of operations that may be performed by a printing device, where the printing device comprises a printhead that includes fluid ejection devices. The fluid ejection devices comprise nozzles. In this example, the printhead may comprise a first set of nozzles corresponding to a first printing color and a second set of nozzles corresponding to a second printing color. Furthermore, the printing device and/or printhead may comprise at least one emission device. As shown, for print content to be printed (block 702), the printing device converts the print content to nozzle data that corresponds to the nozzles of the first and second sets (block 704). The printing device further generates emission device data based at least in part on the print content and the nozzle data (block 706). Generally, the emission device data corresponds to one or more emission devices and the nozzle data. The emission device data controls actuation of the one or more emission devices to emit energy. As will be appreciated, in some examples, the emission device data may be generated based at least in part on printing processes to be implemented during printing. For example, if the at least one emission devices expose ejected printing material drops to change a viscosity of printing material drops which may change a size of the drops or depth of penetration (which may be utilized for half-toning or variable depth printing), the emission device data indicates timing for actuation of the at least one emission device to thereby coordinate the emission of energy with the ejection of various drops of printing material.

The printing device controls nozzles of the first set of nozzles and the second set of nozzles based on the nozzle data to cause the nozzles to eject printing material drops (block 708). In addition, the printing device selectively actuates the at least one emission device based on the emission device data (block 710) to cause the at least one emission device to selectively expose some ejected printing material drops in-flight. As will be appreciated, during ejection of printing material drops and emission of energy, the printing devices controls a physical medium conveyor to thereby convey a physical medium (block 712). Therefore, the printing device prints the print content to thereby generate printed content (block 714).

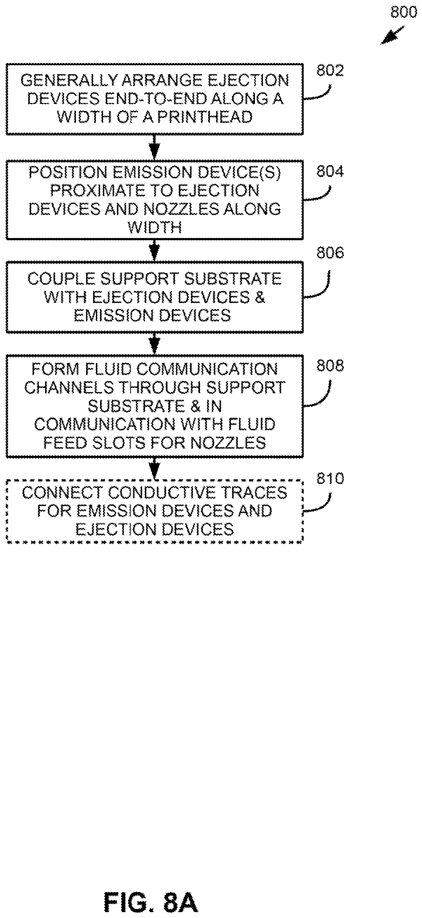

FIGS. 8A-B provide flowcharts that illustrate example processes. Generally, the flowcharts illustrate example processes for fabrication of an example printhead. In FIG. 8A, an example process 800 is illustrated. Ejection devices may be generally arranged end-to-end along a width associated with a printhead (block 802). Generally, the ejection devices comprise nozzles for ejecting, applying, discharging, and/or depositing printing material. In addition, each ejection device may comprise at least one fluid feed slot for each nozzle. For example, ejection devices may be generally arranged end-to-end in one or more respective sets, such as the example arrangement illustrated in the example printhead 300 of FIG. 3. One or more emission devices are positioned proximate the ejection devices and the nozzles thereof (block 804). Generally, the emission devices may comprise electromagnetic radiation devices (e.g., LEDs, radio wave emitters, etc.). Furthermore, the emission devices may generally be positioned along a width of the printhead such that at least one emission device may emit energy to expose ejected printing material drops from each nozzle.

The ejection devices and at least one emission device are coupled to a support substrate (block 806). Generally, the support substrate may comprise a printed circuit board (e.g., a fiberglass circuit board, a ceramic circuit board, etc.), a non-conductive substrate (e.g., a fiberglass support board), and/or a molded compound (e.g., an epoxy-based compound, etc.). Fluid communication channels may be formed through the support substrate (block 808). Generally each fluid communication channel is in fluid communication with feed slots for some nozzles of some ejection devices. As will be appreciated, printing material may be communicated from a printing material reservoir (such as a printing material cartridge or tank) via a respective fluid communication channel and a respective feed slot to a nozzle for ejection thereby. The fluid communication channels may be formed via one or more micromachining processes. For example, the fluid communication channels may be formed by slot-plunge cutting, etching, molding, and/or other such processes.

In some examples, conductive traces may be connected to the emission devices and emission devices (block 810). Generally, the conductive traces may connect the nozzles and emission devices to a processing resource for control thereby. For example, the conductive traces may connect the nozzles and emission devices to the example print engine of FIG. 1 or the example processing resource of FIG. 2.

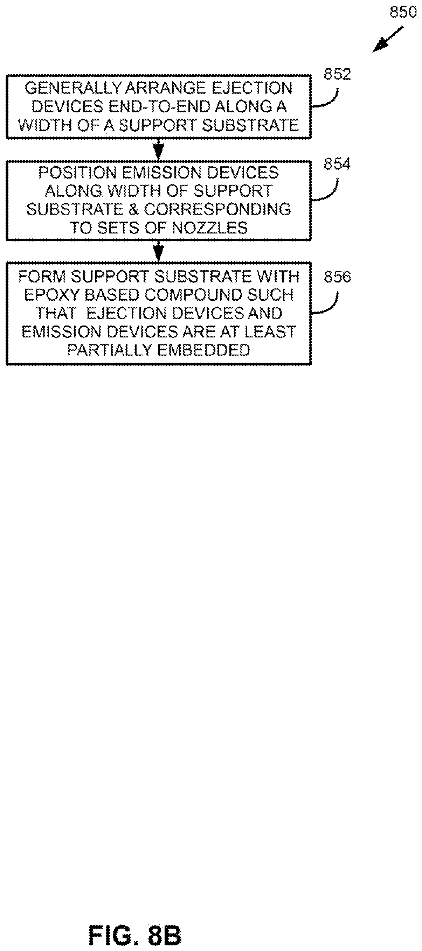

Turning to FIG. 8B, the flowchart illustrates an example process 850. In this example, the ejection devices may be generally arranged end-to-end along a width of a support substrate (block 852). Generally, the width of the support substrate may correspond to a width of a printhead. In some examples the width of the printhead and/or support substrate may correspond to a printing width of a printing device. Such examples may be implemented in a fixed array printing device. In some examples, a printing-width printhead may be referred to as a page-wide printhead, which may be implemented in a page-wide printing device.

Emission devices may be positioned along the width of the support substrate and corresponding to respective sets of nozzles (block 854). Generally, a respective set of nozzles may refer to nozzles of a printhead associated with a common printing location, where each nozzle may eject a different color and/or type of printing material. In some examples, at least one emission device is associated with each respective set of nozzles of a printhead and therefore each printing location of the printhead. In the example of FIG. 8B, the support substrate is formed with an epoxy-based compound such that the ejection devices and emission devices are at least partially embedded in the epoxy-based compound support substrate (block 856). Therefore, in some examples, ejection devices and emission devices may be coupled to a support substrate by forming the support substrate with an epoxy-based compound using a corresponding mold. As will be appreciated, in such examples, the emission devices and ejection devices may be coupled to the support substrate without an additional adhesive. Moreover, in some examples, the support substrate may be generally monolithic and comprising the epoxy-based compound.

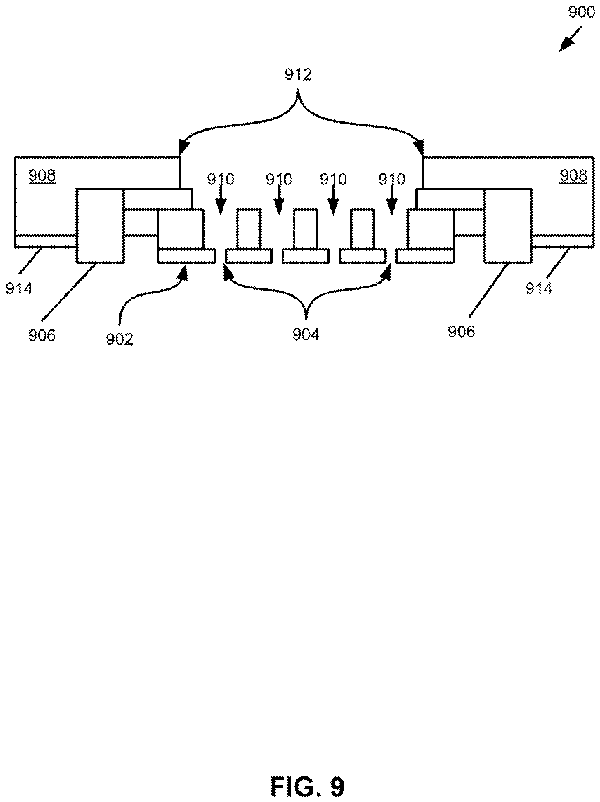

FIG. 9 provides a cross-sectional view of an example printhead 900. In this example, the printhead comprises a fluid ejection device 902 comprising nozzles 904 for ejecting printing material drops. While not shown, each nozzle 904 generally induces at least one ejection device that may cause a printing material drop to be ejected from the nozzle 904. Examples of ejection devices include resistors (which may be implemented, for example, in thermal inkjet printheads and printing devices), a piezoelectric device (which may be implemented in piezoelectric inkjet printheads and printing devices), and/or other such similar printing material ejection devices. In addition, the example printhead 908 comprises emission devices 906 to emit energy (e.g. electromagnetic radiation) to expose printing material drops ejected by nozzles 904 to emitted energy to thereby change a material property of ejected printing material drops. In this example, the ejection device 902 and the emission devices 906 are coupled to a support substrate 908. In the illustrated example, the ejection device 902 and emission devices 906 are at least partially embedded in the support substrate 908. As will be appreciated, in other examples, the ejection device 902 and/or emission devices 906 may be coupled to a surface of a support substrate via bonding, adhesive, overmolding, etc. As shown, each nozzle 904 is associated with at least one fluid feed slot 910 through which printing material may be loaded into the nozzle 904 for ejection thereby. Furthermore, a fluid communication channel 912 is formed through the support substrate 908, where the fluid communication channel 912 is in fluid communication with the fluid feed slots 910 such that printing material may be communicated to the nozzles 904 via the fluid communication channel 912 and the fluid feed slots 910. In this example, conductive traces 914 are illustrated, where the conductive traces 914 may electrically connect the ejection device 902 and the emission devices 906 to a control circuitry (such as a processing resource, print engine, etc.).

In addition, while various examples are described herein, elements and/or combinations of elements may be combined and/or removed for various examples contemplated hereby. For example, the example operations and/or processes provided herein in the flowcharts of FIGS. 6-8B may be performed sequentially, concurrently, or in a different order. Moreover, some example operations of the flowcharts may be added to other flowcharts, and/or some example operations may be removed from flowcharts. Furthermore, in some examples, various components of the example printing devices of FIGS. 1-2, and the example printheads of FIGS. 3-58 may be removed, and/or other components may be added. Similarly, in some examples various instructions of the example memories and/or machine-readable storage mediums of FIG. 2 may be removed, and/or other instructions may be added (such as instructions corresponding to the example operations of FIGS. 6-7).

The invention is defined in the appended claims.

## Claims

1. A printing device, comprising:
a printhead (102) comprising a plurality of nozzles (106) configured to eject printing material drops;
at least one first emission device (108) positioned proximate the printhead (102) and configured to emit a first type of energy;
a second emission device configured to emit a second type of energy different to the first type;
a print engine (110) configured to:
control ejection of printing material drops from the plurality of nozzles (106); and
control emission of energy by the at least one first emission device (108) to thereby expose ejected printing material drops to emitted energy of the first type to change at least one material property of ejected printing material drops before ejected printing material drops contact a surface of a physical medium, wherein the physical medium is exposed to the second type of energy, emitted by the second emission device, to change at least one material property of the physical medium

2. The printing device of claim 1, wherein the at least one first emission device (108) is an ultraviolet light emission device, and the print engine (110) is configured to control emission of the ultraviolet light emission device to thereby expose ultraviolet curable ejected printing material drops to emitted ultraviolet light to change viscosity of ejected printing material drops.

3. The printing device of claim 1, wherein exposure of ejected printing material drops to emitted energy increases viscosity of ejecting printing material drops.

4. The printing device of claim 1, wherein the at least one first emission device (108) comprises a plurality of first emission devices, and each first emission device of the plurality is positioned proximate a respective nozzle of the plurality of nozzles (106).

5. The printing device of claim 1, wherein the print engine (110), configured to control emission of energy by the at least one first emission device (108), is also configured to:
selectively actuate the at least one first emission device (108) to selectively expose some ejected printing material drops, wherein selective actuation and selective exposure of some ejected printing material drops thereby adjusts, in-flight, at least one of a penetration depth of ejected printing material drops and printing material drop size.

6. The printing device of claim 1, wherein the at least one first emission device (108) comprises an ultraviolet light emission device, an infrared emission device, a thermal irradiation device, a corona discharge device, an electron field emission device, or any combination thereof.

7. A process comprising:
generally arranging ejection devices (302a-d; 404a-d) end-to-end along a width of a printhead (300; 400), the ejection devices (302a-d; 404a-d) comprising nozzles (408) and a fluid feed slot corresponding to each nozzle;
positioning first emission devices (304; 406) proximate the ejection devices and the nozzles (408) along the width of the printhead (300; 400) so that when first emission devices (304; 406) emit energy of a first type, ejected printing material drops are exposed to emitted energy of the first type to change at least one material property of ejected printing material drops before ejected printing material drops contact a surface of a physical medium;
positioning a second emission device, for emitting a second type of energy different to the first type, so that the physical medium is exposed to the second type of energy, emitted by the second emission device, to change at least one material property of the physical medium;
coupling a support substrate (306; 402) to the ejection devices and the first emission devices (304; 406); and
forming fluid communication channels (410) through the support substrate (306; 402) and in communication with some fluid feed slots of some respective nozzles (408) of the ejection devices (302a-d; 404a-d).

8. The process of claim 7, further comprising:
connecting conductive traces to the first emission devices (304; 402) and ejection devices (302a-d; 404a-d).

9. The process of claim 7, wherein coupling the support substrate (306; 402) to the ejection devices (302a-d; 404a-d) and the first emission devices (304; 402) comprises:
forming the support substrate (306; 402) with an epoxy based compound such that the ejection devices (302a-d; 404a-d) and first emission devices (304; 402) are at least partially embedded.

## Patentansprüche

1. Druckvorrichtung, die Folgendes umfasst:
einen Druckkopf (102), der mehrere Düsen (106) umfasst, die dazu konfiguriert sind, Druckmaterialtropfen auszustoßen;
wenigstens eine erste Emissionsvorrichtung (108), die in der Nähe des Druckkopfs (102) positioniert und dazu konfiguriert ist, eine erste Art von Energie zu emittieren;
eine zweite Emissionsvorrichtung, die dazu konfiguriert ist, eine zweite Art von Energie zu emittieren, die sich von der ersten Art unterscheidet;
eine Druckmaschine (110), die zu Folgendem konfiguriert ist:
Steuern des Ausstoßes von Druckmaterialtropfen aus den mehreren Düsen (106); und
Steuern der Emission von Energie durch die wenigstens eine erste Emissionsvorrichtung (108), um dadurch ausgestoßene Druckmaterialtropfen der emittierten Energie der ersten Art auszusetzen, um wenigstens eine Materialeigenschaft der ausgestoßenen Druckmaterialtropfen zu ändern, bevor die ausgestoßenen Druckmaterialtropfen eine Oberfläche eines physikalisches Mediums berühren, wobei das physikalische Medium der zweiten Art von Energie ausgesetzt wird, die durch die zweite Emissionsvorrichtung emittiert wird, um wenigstens eine Materialeigenschaft des physikalischen Mediums zu ändern.

2. Druckvorrichtung nach Anspruch 1, wobei die wenigstens eine erste Emissionsvorrichtung (108) eine Ultraviolettlichtemissionsvorrichtung ist und die Druckmaschine (110) dazu konfiguriert ist, die Emission der Ultraviolettlichtemissionsvorrichtung zu steuern, um dadurch ultraviolett aushärtbare ausgestoßene Druckmaterialtropfen dem emittierten Ultraviolettlicht auszusetzen, um eine Viskosität der ausgestoßenen Druckmaterialtropfen zu ändern.

3. Druckvorrichtung nach Anspruch 1, wobei das Aussetzen der ausgestoßenen Druckmaterialtropfen der emittierten Energie die Viskosität der ausgestoßenen Druckmaterialtropfen erhöht.

4. Druckvorrichtung nach Anspruch 1, wobei die wenigstens eine erste Emissionsvorrichtung (108) mehrere erste Emissionsvorrichtungen umfasst und jede erste Emissionsvorrichtung der mehreren Vorrichtungen in der Nähe einer entsprechenden Düse der mehreren Düsen (106) positioniert ist.

5. Druckvorrichtung nach Anspruch 1, wobei die Druckmaschine (110), die dazu konfiguriert ist, die Emission von Energie durch die wenigstens eine erste Emissionsvorrichtung (108) zu steuern, ebenso zu Folgendem konfiguriert ist:
selektives Betätigen der wenigstens einen ersten Emissionsvorrichtung (108), um einige ausgestoßene Druckmaterialtropfen selektiv freizulegen, wobei die selektive Betätigung und selektive Freilegung einiger ausgestoßener Druckmaterialtropfen dadurch während des Fluges wenigstens eine Eindringtiefe der ausgestoßenen Druckmaterialtropfen und die Druckmaterialtropfengröße einstellt.

6. Druckvorrichtung nach Anspruch 1, wobei die wenigstens eine erste Emissionsvorrichtung (108) eine Ultraviolettlichtemissionsvorrichtung, eine Infrarotemissionsvorrichtung, eine Wärmestrahlungsvorrichtung, eine Koronaentladungsvorrichtung, eine Elektronenfeldemissionsvorrichtung oder eine beliebige Kombination davon umfasst.

7. Verfahren, das Folgendes umfasst:
allgemeines Anordnen von Ausstoßvorrichtungen (302a-d; 404a-d) Ende an Ende entlang einer Breite eines Druckkopfes (300; 400), wobei die Ausstoßvorrichtungen (302a-d; 404a-d) Düsen (408) und einen Fluidzufuhrschlitz entsprechend jeder Düse umfassen;
Positionieren der ersten Emissionsvorrichtungen (304; 406) in der Nähe der Ausstoßvorrichtungen und der Düsen (408) entlang der Breite des Druckkopfs (300; 400), so dass, wenn die ersten Emissionsvorrichtungen (304; 406) Energie einer ersten Art emittieren, ausgestoßene Druckmaterialtropfen der emittierten Energie der ersten Art ausgesetzt werden, um wenigstens eine Materialeigenschaft der ausgestoßenen Druckmaterialtropfen zu ändern, bevor die ausgestoßenen Druckmaterialtropfen eine Oberfläche eines physikalischen Mediums berühren;
Positionieren einer zweiten Emissionsvorrichtung zum Emittieren einer zweiten Art von Energie, die sich von der ersten Art unterscheidet, so dass das physikalische Medium der zweiten Art von Energie ausgesetzt wird, die durch die zweite Emissionsvorrichtung emittiert wird, um wenigstens eine Materialeigenschaft des physikalischen Mediums zu ändern;
Koppeln eines Trägersubstrats (306; 402) mit den Ausstoßvorrichtungen und den ersten Emissionsvorrichtungen (304; 406); und
Ausbilden von Fluidverbindungskanälen (410) durch das Trägersubstrat (306; 402) und in Verbindung mit einigen Fluidzufuhrschlitzen von einigen jeweiligen Düsen (408) der Ausstoßvorrichtungen (302a-d; 404a-d).

8. Verfahren nach Anspruch 7, das ferner Folgendes umfasst:
Verbinden von Leiterbahnen mit den ersten Emissionsvorrichtungen (304; 402) und Ausstoßvorrichtungen (302a-d; 404a-d).

9. Verfahren nach Anspruch 7, wobei das Koppeln des Trägersubstrats (306; 402) mit den Ausstoßvorrichtungen (302a-d; 404a-d) und den ersten Emissionsvorrichtungen (304; 402) Folgendes umfasst:
Ausbilden des Trägersubstrats (306; 402) mit einer Verbindung auf Epoxidbasis, derart, dass die Ausstoßvorrichtungen (302a-d; 404a-d) und die ersten Emissionsvorrichtungen (304; 402) wenigstens teilweise eingebettet sind.

## Revendications

1. Dispositif d'impression comprenant :
une tête d'impression (102) comprenant une pluralité de buses (106) configurées pour éjecter des gouttes de matériau d'impression ;
au moins un premier dispositif d'émission (108) positionné à proximité de la tête d'impression (102) et configuré pour émettre un premier type d'énergie ;
un second dispositif d'émission configuré pour émettre un second type d'énergie différent du premier type ;
un moteur d'impression (110) configuré pour :
commander l'éjection de gouttes de matériau d'impression de la pluralité de buses (106) ; et
commander l'émission d'énergie par l'au moins un premier dispositif d'émission (108) pour exposer ainsi les gouttes de matériau d'impression éjectées à l'énergie émise du premier type afin de modifier au moins une propriété de matériau des gouttes de matériau d'impression éjectées avant que les gouttes de matériau d'impression éjectées entrent en contact avec une surface d'un support physique, le support physique étant exposé au second type d'énergie, émise par le second dispositif d'émission, pour modifier au moins une propriété de matériau du support physique

2. Dispositif d'impression selon la revendication 1, dans lequel l'au moins un premier dispositif d'émission (108) est un dispositif d'émission de lumière ultraviolette, et le moteur d'impression (110) est configuré pour commander l'émission du dispositif d'émission de lumière ultraviolette pour exposer ainsi les gouttes de matériau d'impression l'impression éjectées durcissable par ultraviolets à la lumière ultraviolette émise pour modifier la viscosité des gouttes de matériau d'impression éjectées.

3. Dispositif d'impression selon la revendication 1, dans lequel l'exposition de gouttes de matériau d'impression éjectées à l'énergie émise augmente la viscosité des gouttes de matériau d'impression éjectées.

4. Dispositif d'impression selon la revendication 1, dans lequel l'au moins un premier dispositif d'émission (108) comprend une pluralité de premiers dispositifs d'émission, et chaque premier dispositif d'émission de la pluralité est positionné à proximité d'une buse respective de la pluralité de buses (106).

5. Dispositif d'impression selon la revendication 1, dans lequel le moteur d'impression (110), configuré pour commander l'émission d'énergie par l'au moins un premier dispositif d'émission (108), est également configuré pour :
actionner sélectivement l'au moins un premier dispositif d'émission (108) pour exposer sélectivement certaines gouttes de matériau d'impression éjectées, l'actionnement sélectif et l'exposition sélective de certaines gouttes de matériau d'impression éjectées ajustant ainsi, en vol, une profondeur de pénétration des gouttes de matériau d'impression éjectées et/ou la taille des gouttes de matériau d'impression.

6. Dispositif d'impression selon la revendication 1, dans lequel l'au moins un premier dispositif d'émission (108) comprend un dispositif d'émission de lumière ultraviolette, un dispositif d'émission infrarouge, un dispositif d'irradiation thermique, un dispositif à décharge corona, un dispositif d'émission de champ à électrons ou toute combinaison de ceux-ci.

7. Procédé comprenant :
l'agencement général des dispositifs d'éjection (302a-d ; 404a-d) bout à bout le long d'une largeur d'une tête d'impression (300 ; 400), les dispositifs d'éjection (302ad ; 404a-d) comprenant des buses (408) et une fente d'alimentation en fluide correspondant à chaque buse ;
le positionnement des premiers dispositifs d'émission (304 ; 406) à proximité des dispositifs d'éjection et des buses (408) le long de la largeur de la tête d'impression (300 ; 400) de telle sorte que lorsque les premiers dispositifs d'émission (304 ; 406) émettent de l'énergie d'un premier type, les gouttes de matériau d'impression éjectées sont exposées à l'énergie émise du premier type pour modifier au moins une propriété de matériau des gouttes de matériau d'impression éjectées avant que les gouttes de matériau d'impression éjectées entrent en contact avec une surface d'un support physique ;
le positionnement d'un second dispositif d'émission, pour émettre un second type d'énergie différent du premier type, de telle sorte que le support physique est exposé au second type d'énergie, émise par le second dispositif d'émission, pour modifier au moins une propriété de matériau du support physique ;
le couplage d'un substrat de support (306 ; 402) aux dispositifs d'éjection et aux premiers dispositifs d'émission (304 ; 406) ; et
le fait de former des canaux de communication de fluide (410) à travers le substrat de support (306 ; 402) et en communication avec certaines fentes d'alimentation en fluide de certaines buses respectives (408) des dispositifs d'éjection (302a-d ; 404a-d).

8. Procédé selon la revendication 7, comprenant en outre :
la connexion des traces conductrices aux premiers dispositifs d'émission (304 ; 402) et aux dispositifs d'éjection (302a-d ; 404a-d).

9. Procédé selon la revendication 7, dans lequel le couplage du substrat de support (306 ; 402) aux dispositifs d'éjection (302a-d ; 404a-d) et aux premiers dispositifs d'émission (304 ; 402) comprend :
le fait de former le substrat de support (306 ; 402) avec un composé à base d'époxy de telle sorte que les dispositifs d'éjection (302a-d ; 404a-d) et les premiers dispositifs d'émission (304 ; 402) sont au moins partiellement incorporés.
